# EUROPEAN PATENT APPLICATION

(11) **EP 4 083 875 A1**
(43) Date of publication of application: **02.11.2022**
(21) Application number: 22168827.8
(22) Date of filing: 19.04.2022
(51) Int. Cl.: G06N 20/20, G01S 17/931, G06T 7/00, G06V 20/56

(54) **DATA ANNOTATION METHOD AND APPARATUS, ELECTRONIC DEVICE AND READABLE STORAGE MEDIUM**

(30) Priority: 20.04.2021 CN 202110425364
(71) Applicant: BEIJING BAIDU NETCOM SCIENCE TECHNOLOGY CO., LTD., Beijing 100085 (CN)
(72) Inventor: ZHANG, Ye, Beijing 100085 (CN); WANG, Jun, Beijing 100085 (CN); WANG, Hao, Beijing 100085 (CN); MA, Yu, Beijing 100085 (CN); WANG, Liang, Beijing 100085 (CN)
(74) Representative: dompatent von Kreisler Selting Werner - Partnerschaft von Patent- und Rechtsanwälten mbB

(57) **Abstract**

The present disclosure discloses a data annotation method and apparatus, an electronic device and a readable storage medium, and relates to artificial intelligence fields such as deep learning, computer vision and autonomous driving. The method may include: acquiring a detection model, the detection model being trained by using sensor data manually annotated as startup data; performing obstacle detection on to-be-annotated sensor data by using the detection model, the startup data and the to-be-annotated sensor data being a same type of sensor data; performing obstacle tracking and matching according to detection results to obtain obstacle trajectory information; and modifying the detection results according to the obstacle trajectory information, and taking modified detection results as required annotation results. Labor and time costs can be saved by use of the solutions of the present disclosure.

## Description

### Field of the Disclosure

The present disclosure relates to the field of artificial intelligence technologies, and in particular, to a data annotation method and apparatus, an electronic device and a readable storage medium in fields such as deep learning, computer vision and autonomous driving.

### Background of the Disclosure

In practical applications, many obstacle detection tasks are realized by a supervised learning model, such as obstacle detection based on Lidar (Light Detection and Ranging) point cloud data. Therefore, there is a need to pre-acquire a certain amount of point cloud annotation data for model training.

At present, the point cloud annotation data is acquired mainly relying on manual annotation, which requires high labor and time costs.

### Summary of the Disclosure

The present disclosure provides a data annotation method and apparatus, an electronic device and a readable storage medium.

A method for data annotation, including:
acquiring a detection model, the detection model being trained by using sensor data manually annotated as startup data;
performing obstacle detection on to-be-annotated sensor data by using the detection model, the startup data and the to-be-annotated sensor data being a same type of sensor data;
performing obstacle tracking and matching according to detection results to obtain obstacle trajectory information; and
modifying the detection results according to the obstacle trajectory information, and taking modified detection results as required annotation results.

An apparatus for data annotation, including:
an acquisition module configured to acquire a detection model, the detection model being trained by using sensor data manually annotated as startup data;
a detection module configured to perform obstacle detection on to-be-annotated sensor data by using the detection model, the startup data and the to-be-annotated sensor data being a same type of sensor data;
a tracking module configured to perform obstacle tracking and matching according to detection results to obtain obstacle trajectory information; and
a modification module configured to modify the detection results according to the obstacle trajectory information, and take modified detection results as required annotation results.

An electronic device, including:
at least one processor; and
a memory in communication connection with the at least one processor; wherein
the memory stores instructions executable by the at least one processor, and the instructions are executed by the at least one processor to enable the at least one processor to perform the method as described above.

A non-transitory computer-readable storage medium storing computer instructions, wherein the computer instructions are configured to cause a computer to perform the method as described above.

A computer program product, including a computer program, wherein, when the computer program is executed by a processor, the method as described above is performed.

One embodiment in the above disclosure has the following advantages or beneficial effects: based on the acquired detection model, to-be-annotated sensor data may be automatically annotated subsequently, thereby saving labor and time costs and improving annotation efficiency and the like.

It should be understood that the content described in this part is neither intended to identify key or significant features of the embodiments of the present disclosure, nor intended to limit the scope of the present disclosure. Other features of the present disclosure will be made easier to understand through the following description.

### Brief Description of Drawings

The accompanying drawings are intended to provide a better understanding of the solutions and do not constitute a limitation on the present disclosure. In the drawings,
FIG. 1 is a flowchart of an embodiment of a method for data annotation according to the present disclosure;
FIG. 2 is a schematic diagram of a whole implementation process of the method for data annotation according to the present disclosure;
FIG. 3 is a schematic structural diagram of composition of an embodiment of an apparatus 300 for data annotation according to the present disclosure; and
FIG. 4 is a schematic block diagram of an exemplary electronic device 400 that can be configured to implement embodiments of the present disclosure.

### Detailed Description of Preferred Embodiments

Exemplary embodiments of the present disclosure are illustrated below with reference to the accompanying drawings, which include various details of the present disclosure to facilitate understanding and should be considered only as exemplary. Therefore, those of ordinary skill in the art should be aware that various changes and modifications can be made to the embodiments described herein without departing from the scope and spirit of the present disclosure. Similarly, for clarity and simplicity, descriptions of well-known functions and structures are omitted in the following description.

In addition, it shall be understood that the term "and/or" herein is merely an association relationship describing associated objects, indicating that three relationships may exist. For example, A and/or B indicates that there are three cases of A alone, A and B together, and B alone. In addition, the character "/" herein generally means that associated objects before and after it are in an "or" relationship.

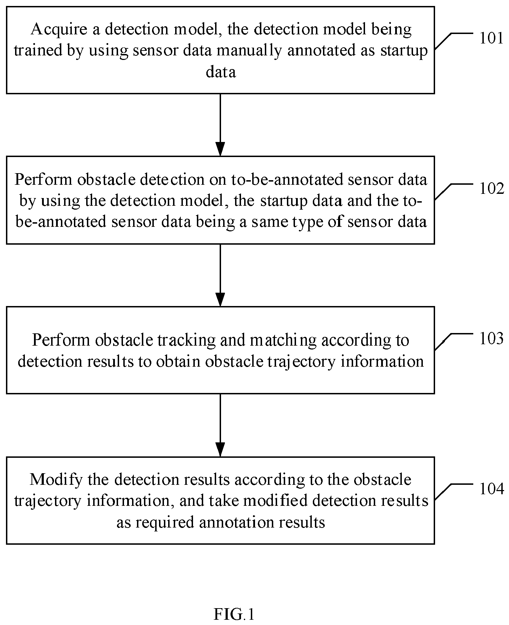

FIG. 1 is a flowchart of an embodiment of a method for data annotation according to the present disclosure. As shown in FIG. 1, the following specific implementations are included.

In step 101, a detection model is acquired, the detection model being trained by using sensor data manually annotated as startup data.

In step 102, obstacle detection is performed on to-be-annotated sensor data by using the detection model, the startup data and the to-be-annotated sensor data being a same type of sensor data.

In step 103, obstacle tracking and matching is performed according to detection results to obtain obstacle trajectory information.

In step 104, the detection results are modified according to the obstacle trajectory information, and modified detection results are taken as required annotation results.

As can be seen, in the solution of the above method embodiment, only a small amount of manually annotated sensor data is required to be acquired as startup data, and to-be-annotated sensor data may be automatically annotated subsequently, thereby saving labor and time costs and improving annotation efficiency and the like.

Preferably, the sensor data may be point cloud data corresponding to a Lidar sensor. In the above manner, a large number of high-quality point cloud annotation data may be quickly acquired. The solution according to the present disclosure is further described below by taking the point cloud data as an example.

The specific amount of the point cloud data as startup data may be determined according to an actual requirement. The amount of the point cloud data as startup data may be less than to-be-annotated point cloud data.

For example, it is assumed that a total of 500,000 pieces of point cloud data exist and are numbered as point cloud data 1 to point cloud data 500000 in chronological order, none of which are annotated. Generally, such point cloud data is continuous in time, that is, 500,000 frames of point cloud data continuously collected. Then, the point cloud data 1 to the point cloud data 5000 may be manually annotated as startup data, and the remaining point cloud data 5001 to point cloud data 500000 may be taken as to-be-annotated point cloud data.

For any piece of the point cloud data, annotation results manually annotated may include locations, sizes, orientations and categories (such as people and vehicles) of obstacles in the point cloud data.

Afterwards, the detection model may be trained with the startup data. Preferably, M detection models may be trained respectively with the startup data. M is a positive integer greater than one. The specific value may be determined according to an actual requirement, which typically ranges from 3 to 5. For example, 4 detection models may be trained respectively with the startup data. That is, the training of a basic model group is completed.

The solution according to the present disclosure is offline processing with smaller computational performance constraints, so a model with stronger expressive power can be used, such as a timing model or other models. In addition, the corresponding detection models may be trained from different dimensions such as a top view and a front view. There are no limitations on the specific type of the M detection models.

Further, model integration may be performed on the M detection models to obtain an integrated model. The performance of the integrated model is generally better than that of any single detection model, thereby improving a subsequent detection effect and the like. There are also no limitations on how to perform model integration, such as in an existing integration manner.

Based on the integrated model, offline detection may be performed, and the to-be-annotated point cloud data may be detected offline by using the integrated model. That is, the input is the to-be-annotated point cloud data, and the output is an offline detection result (obstacle detection result). Specific content of the offline detection result may be the same as that of the annotation result manually annotated.

Then, offline tracking may be performed. That is, obstacle tracking and matching may be performed according to detection results to obtain obstacle trajectory information.

Preferably, for the to-be-annotated point cloud data, according to the detection results, a first round of obstacle tracking and matching may be performed in chronological order and a second round of obstacle tracking and matching may be performed in reverse chronological order, and then the obstacle trajectory information may be determined by combining tracking and matching results of the two rounds.

That is, two rounds of obstacle tracking and matching may be performed. The first round of obstacle tracking and matching is obstacle tracking and matching performed in chronological order, and the second round of obstacle tracking and matching is obstacle tracking and matching performed in reverse chronological order.

Obstacle tracking and matching refers to the matching of obstacles between frames, including appearance of new obstacles, disappearance of old obstacles and the matching of IDs of obstacles in a previous frame and a current frame. There are no limitations on how to perform obstacle tracking and matching, such as by using an existing Hungarian matching algorithm.

As descried above, the obstacle trajectory information may be determined by combining the tracking and matching results of the two rounds. Preferably, the tracking and matching result of the first round may be compared with the tracking and matching result of the second round, and a same part between the tracking and matching result of the first round and the tracking and matching result of the second round is retained. A part to be retained may be determined by a greedy solution for different parts between the tracking and matching result of the first round and the tracking and matching result of the second round, and then the obstacle trajectory information may be determined according to the retained part.

For example, point cloud data 2 and point cloud data 3 are two adjacent frames of point cloud data in time sequence. Two obstacles are detected from the point cloud data 2, which are Obstacle a and Obstacle b respectively. Three obstacles are detected from the point cloud data 3, which are Obstacle c, Obstacle d and Obstacle e respectively. During the first round of obstacle tracking and matching, Obstacle a and Obstacle c are determined as a same obstacle, and Obstacle b and Obstacle d are determined as a same obstacle. During the second round of obstacle tracking and matching, Obstacle c and Obstacle a are determined as a same obstacle, but Obstacle e and Obstacle b are determined as a same obstacle. Then, Obstacle a and Obstacle c are same parts between the tracking and matching result of the first round and the tracking and matching result of the second round, while Obstacle b and Obstacle d as well as Obstacle e and Obstacle b are different parts between the tracking and matching result of the first round and the tracking and matching result of the second round.

The same parts may be directly retained. That is, the same parts between the tracking and matching result of the first round and the tracking and matching result of the second round are locked. For the different parts, the different parts and corresponding tracking matching scores may be stored in a tracking cache together, and the tracking matching scores may be obtained during the obstacle tracking and matching. Further, for the parts in the cache, a part to be retained may be determined by a greedy solution. That is, a greedy algorithm may be adopted for processing. Specific implementation thereof is the prior art. For example, the part with the highest tracking matching score may be locked (retained), the part conflicting therewith may be deleted, and then the process is repeated until the cache is empty.

The obstacle trajectory information may be determined according to the retained part. That is, the obstacle trajectory information may be generated according to the retained tracking and matching result, and specific implementation thereof is the prior art. For example, if an obstacle simultaneously appears in continuous 10 frames of point cloud data, one piece of obstacle trajectory information about the obstacle may be generated accordingly. As can be seen, the retained part includes: the same part between the tracking and matching result of the first round and the tracking and matching result of the second round, and the part to be retained determined by a greedy solution for different parts between the tracking and matching result of the first round and the tracking and matching result of the second round.

In the above processing manner, taking advantage of the completeness of the input data undergoing offline processing in time sequence, the track matching results of obstacles are optimized globally in time sequence, thereby improving the accuracy of the processing results.

After the obstacle trajectory information is acquired, the detection results may be modified according to the obstacle trajectory information, and modified detection results are taken as required annotation results.

Preferably, noise identification may be performed on the obstacle trajectory information by using a pre-trained noise identification model, and the detection result corresponding to the obstacle trajectory information identified as non-noise is taken as the required annotation result.

There are no limitations on how to train the noise identification model. For example, the noise identification model may be trained based on the manually annotated startup data. For example, the obstacle trajectory information may be generated according to the startup data, and noise features of the obstacle trajectory information may be extracted, such as average detection confidence, a minimum value, a life cycle, an average number of points, a minimum number of points and distribution of classification identification. Then, the noise identification model may be trained based on the noise features and whether to be annotation results of noise.

In this way, noise identification may be performed, by using the noise identification model, on the obstacle trajectory information obtained after offline detection and offline tracking. That is, the input is one piece of obstacle trajectory information, and the output is an identification result of whether the obstacle trajectory information is noise.

Correspondingly, the detection result corresponding to the obstacle trajectory information identified as non-noise may be taken as the required annotation result. Assuming that a total of 10,000 pieces of obstacle trajectory information exist, among which 500 pieces are identified as noise, the detection results corresponding to the remaining 9,500 pieces of obstacle trajectory information identified as non-noise may be taken as the required annotation results.

Noise filtering may be performed on the detection results, so as to filter out the detection results which are noise, thereby further improving the accuracy of the detection results acquired.

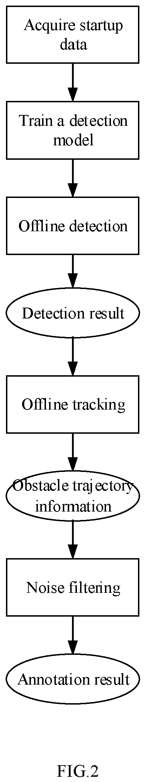

Based on the above introduction, FIG. 2 is a schematic diagram of a whole implementation process of the method for data annotation according to the present disclosure. Refer to the above related description for specific implementation thereof, which is not described in detail.

In conclusion, a large amount of high-quality sensor annotation data, such as point cloud annotation data, may be acquired quickly and efficiently by using the method for data annotation according to the present disclosure, thereby expanding the scale and diversity of training data for relevant model training.

It is to be noted that for the sake of simplicity, the method embodiments described above are described as a combination of a series of actions. However, those of ordinary skill in the art should understand that the present disclosure is not limited by the order of action described. Therefore, according to the present disclosure, some steps may be performed in another order or at the same time. Secondly, those of ordinary skill in the art should also know that the embodiments described in the specification are preferred embodiments and the actions and modules involved are not necessary to the present disclosure.

The above is the introduction to the method embodiments. The following is a further illustration of the solutions according to the present disclosure through apparatus embodiments.

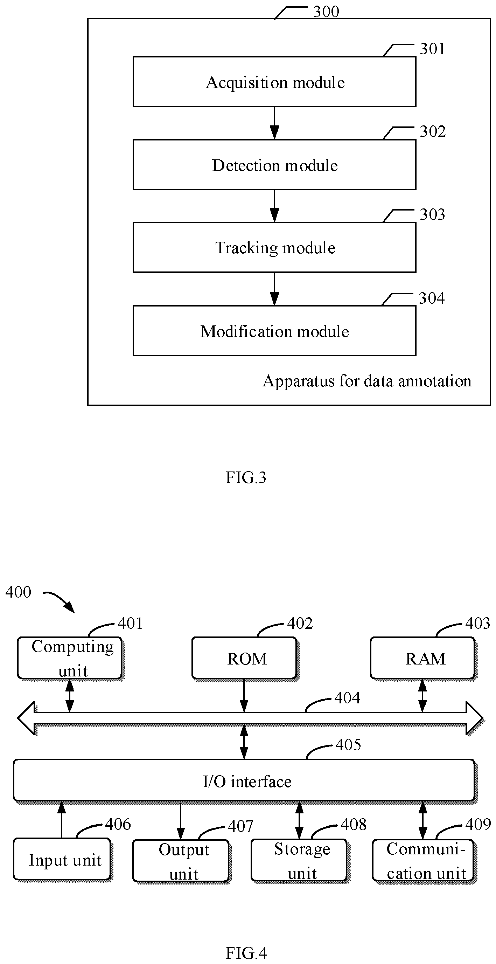

FIG. 3 is a schematic structural diagram of composition of an embodiment of an apparatus 300 for data annotation according to the present disclosure. As shown in FIG. 3, the apparatus includes an acquisition module 301, a detection module 302, a tracking module 303 and a modification module 304.

The acquisition module 301 is configured to acquire a detection model, the detection model being trained by using sensor data manually annotated as startup data.

The detection module 302 is configured to perform obstacle detection on to-be-annotated sensor data by using the detection model, the startup data and the to-be-annotated sensor data being a same type of sensor data.

The tracking module 303 is configured to perform obstacle tracking and matching according to detection results to obtain obstacle trajectory information.

The modification module 304 is configured to modify the detection results according to the obstacle trajectory information, and take modified detection results as required annotation results.

Also taking point cloud data as an example, the specific amount of the point cloud data as startup data may be determined according to an actual requirement. The amount of the point cloud data as startup data may be less than to-be-annotated point cloud data.

For example, it is assumed that a total of 500,000 pieces of point cloud data exist and are numbered as point cloud data 1 to point cloud data 500000 in chronological order, none of which are annotated. Generally, such point cloud data is continuous in time, that is, 500,000 frames of point cloud data continuously collected. Then the point cloud data 1 to the point cloud data 5000 may be manually annotated as startup data, and the remaining point cloud data 5001 to point cloud data 500000 may be taken as to-be-annotated point cloud data.

The acquisition module 301 may obtain the detection model by training with the startup data. Preferably, M detection models may be trained respectively with the startup data. M is a positive integer greater than one.

Correspondingly, the detection module 302 may perform model integration on the M detection models to obtain an integrated model. The performance of the integrated model is generally better than that of any single detection model, and then obstacle detection may be performed on to-be-annotated point cloud data by using the integrated model.

Then, the tracking module 303 may perform obstacle tracking and matching according to detection results to obtain obstacle trajectory information. Preferably, for the to-be-annotated point cloud data, according to the detection results, a first round of obstacle tracking and matching may be performed in chronological order and a second round of obstacle tracking and matching in reverse chronological order may be performed, and then the obstacle trajectory information may be determined by combining tracking and matching results of the two rounds.

The tracking and matching result of the first round may be compared with the tracking and matching result of the second round, and a same part between the tracking and matching result of the first round and the tracking and matching result of the second round is retained. A part to be retained may be determined by a greedy solution for different parts between the tracking and matching result of the first round and the tracking and matching result of the second round, and then the obstacle trajectory information may be determined according to the retained part.

Further, the modification module 304 may modify the detection results according to the acquired obstacle trajectory information, and take modified detection results as required annotation results. Preferably, noise identification may be performed on the obstacle trajectory information by using a pre-trained noise identification model, and the detection result corresponding to the obstacle trajectory information identified as non-noise is taken as the required annotation result.

The specific workflow of the apparatus embodiment shown in FIG. 3 can be obtained with reference to the related description in the above method embodiment and is not repeated.

In conclusion, by use of the solution in the apparatus embodiment of the present application, labor and time costs may be saved, annotation efficiency may be improved, and so on.

The solutions described in the present disclosure may be applied to the field of artificial intelligence, and in particular, to fields such as deep learning, computer vision and autonomous driving.

Artificial intelligence is a discipline that studies how to make computers simulate certain thinking processes and intelligent behaviors (such as learning, reasoning, thinking and planning) of human beings, which includes hardware technologies and software technologies. The artificial intelligence hardware technologies generally include sensors, dedicated artificial intelligence chips, cloud computing, distributed storage, big data processing and other technologies. The artificial intelligence software technologies mainly include a computer vision technology, a speech recognition technology, a natural language processing technology, machine learning/deep learning, a big data processing technology, a knowledge graph technology and other major directions.

According to embodiments of the present disclosure, the present disclosure further provides an electronic device, a readable storage medium and a computer program product.

FIG. 4 is a schematic block diagram of an exemplary electronic device 400 that can be configured to implement embodiments of the present disclosure. The electronic device is intended to represent various forms of digital computers, such as laptops, desktops, workbenches, personal digital assistants, servers, blade servers, mainframe computers and other suitable computers. The electronic device may further represent various forms of mobile devices, such as personal digital assistants, cellular phones, smart phones, wearable devices and other similar computing devices. The components, their connections and relationships, and their functions shown herein are examples only, and are not intended to limit the implementation of the present disclosure as described and/or required herein.

As shown in FIG. 4, the device 400 includes a computing unit 401, which may perform various suitable actions and processing according to a computer program stored in a read-only memory (ROM) 402 or a computer program loaded from a storage unit 408 into a random access memory (RAM) 403. The RAM 403 may also store various programs and data required to operate the device 400. The computing unit 401, the ROM 402 and the RAM 403 are connected to one another by a bus 404. An input/output (I/O) interface 405 may also be connected to the bus 404.

A plurality of components in the device 400 are connected to the I/O interface 405, including an input unit 406, such as a keyboard and a mouse; an output unit 407, such as various displays and speakers; a storage unit 408, such as disks and discs; and a communication unit 409, such as a network card, a modem and a wireless communication transceiver. The communication unit 409 allows the device 400 to exchange information/data with other devices over computer networks such as the Internet and/or various telecommunications networks.

The computing unit 401 may be a variety of general-purpose and/or special-purpose processing components with processing and computing capabilities. Some examples of the computing unit 401 include, but are not limited to, a central processing unit (CPU), a graphics processing unit (GPU), various artificial intelligence (AI) computing chips, various computing units that run machine learning model algorithms, a digital signal processor (DSP), and any appropriate processor, controller or microcontroller, etc. The computing unit 401 performs the methods and processing described above, such as the methods described in the present disclosure. For example, in some embodiments, the method described in the present disclosure may be implemented as a computer software program that is tangibly embodied in a machine-readable medium, such as a storage unit 408. In some embodiments, part or all of a computer program may be loaded and/or installed on the device 400 via the ROM 402 and/or the communication unit 409. One or more steps of the method described in the present disclosure may be performed when the computer program is loaded into the RAM 403 and executed by the computing unit 401. Alternatively, in other embodiments, the computing unit 401 may be configured to perform the methods described in the present disclosure by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a load programmable logic device (CPLD), computer hardware, firmware, software, and/or combinations thereof. Such implementations may include implementation in one or more computer programs that are executable and/or interpretable on a programmable system including at least one programmable processor, which can be special or general purpose, coupled to receive data and instructions from a storage system, at least one input apparatus, and at least one output apparatus, and to transmit data and instructions to the storage system, the at least one input apparatus, and the at least one output apparatus.

Program codes configured to implement the methods in the present disclosure may be written in any combination of one or more programming languages. Such program codes may be supplied to a processor or controller of a general-purpose computer, a special-purpose computer, or another programmable data processing apparatus to enable the function/operation specified in the flowchart and/or block diagram to be implemented when the program codes are executed by the processor or controller. The program codes may be executed entirely on a machine, partially on a machine, partially on a machine and partially on a remote machine as a stand-alone package, or entirely on a remote machine or a server.

In the context of the present disclosure, machine-readable media may be tangible media which may include or store programs for use by or in conjunction with an instruction execution system, apparatus or device. The machine-readable media may be machine-readable signal media or machine-readable storage media. The machine-readable media may include, but are not limited to, electronic, magnetic, optical, electromagnetic, infrared, or semiconductor systems, apparatuses or devices, or any suitable combinations thereof. More specific examples of machine-readable storage media may include electrical connections based on one or more wires, a portable computer disk, a hard disk, a random access memory (RAM), a read-only memory (ROM), an erasable programmable read only memory (EPROM or flash memory), an optical fiber, a compact disk read only memory (CD-ROM), an optical storage device, a magnetic storage device, or any suitable combination thereof.

To provide interaction with a user, the systems and technologies described here can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual, auditory, or tactile feedback); and input from the user may be received in any form (including sound input, voice input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementation mode of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN) and the Internet.

The computer system may include a client and a server. The client and the server are generally far away from each other and generally interact via the communication network. A relationship between the client and the server is generated through computer programs that run on a corresponding computer and have a client-server relationship with each other. The server may be a cloud server, also known as a cloud computing server or cloud host, which is a host product in the cloud computing service system to solve the problems of difficult management and weak business scalability in the traditional physical host and a virtual private server (VPS). The server may also be a distributed system server, or a server combined with blockchain. Cloud computing refers to a technical system that is connected to an elastic and scalable shared physical or virtual resource pool over a network and may deploy and manage resources on demand and in a self-service manner. The resources include servers, operating systems, networks, software, applications, storage devices, and so on. Through a cloud computing technology, efficient and powerful data processing capabilities can be provided for technical applications, such as artificial intelligence and blockchain, and model training.

It should be understood that the steps can be reordered, added, or deleted using the various forms of processes shown above. For example, the steps described in the present disclosure may be executed in parallel or sequentially or in different sequences, provided that desired results of the technical solutions disclosed in the present disclosure are achieved, which is not limited herein.

The above specific implementations do not limit the extent of protection of the present disclosure. Those skilled in the art should understand that various modifications, combinations, sub-combinations, and replacements can be made according to design requirements and other factors. Any modifications, equivalent substitutions and improvements made within the spirit and principle of the present disclosure all should be included in the extent of protection of the present disclosure.

## Claims

1. A method for data annotation, **characterized by** comprising:
acquiring (101) a detection model, the detection model being trained by using sensor data manually annotated as startup data;
performing (102) obstacle detection on to-be-annotated sensor data by using the detection model, the startup data and the to-be-annotated sensor data being a same type of sensor data;
performing (103) obstacle tracking and matching according to detection results to obtain obstacle trajectory information; and
modifying (104) the detection results according to the obstacle trajectory information, and taking (104) modified detection results as required annotation results.

2. The method according to claim 1, wherein
M detection models are provided, M being a positive integer greater than one; and
the step of performing obstacle detection on to-be-annotated sensor data by using the detection model comprises: performing model integration on the M detection models, and performing obstacle detection on the to-be-annotated sensor data by using an integrated model.

3. The method according to claim 1, wherein the step of performing obstacle tracking and matching according to detection results to obtain obstacle trajectory information comprises:
for the to-be-annotated sensor data, performing a first round of obstacle tracking and matching in chronological order and a second round of obstacle tracking and matching in reverse chronological order according to the detection results, and determining the obstacle trajectory information by combining tracking and matching results of the two rounds.

4. The method according to claim 3, wherein the step of determining the obstacle trajectory information by combining tracking and matching results of the two rounds comprises:
comparing the tracking and matching result of the first round with the tracking and matching result of the second round, and retaining a same part between the tracking and matching result of the first round and the tracking and matching result of the second round;
determining a part to be retained by a greedy solution for different parts between the tracking and matching result of the first round and the tracking and matching result of the second round; and
determining the obstacle trajectory information according to the retained part.

5. The method according to claim 1, wherein the step of modifying the detection results according to the obstacle trajectory information, and taking modified detection results as required annotation results comprises:
performing noise identification on the obstacle trajectory information by using a pre-trained noise identification model, and taking the detection result corresponding to the obstacle trajectory information identified as non-noise as the annotation result.

6. An apparatus (300) for data annotation, **characterized by** comprising:
an acquisition module (301) configured to acquire a detection model, the detection model being trained by using sensor data manually annotated as startup data;
a detection module (302) configured to perform obstacle detection on to-be-annotated sensor data by using the detection model, the startup data and the to-be-annotated sensor data being a same type of sensor data;
a tracking module (303) configured to perform obstacle tracking and matching according to detection results to obtain obstacle trajectory information; and
a modification module (304) configured to modify the detection results according to the obstacle trajectory information, and take modified detection results as required annotation results.

7. The apparatus (300) according to claim 6, wherein
M detection models are provided, M being a positive integer greater than one; and
the detection module (302) is further configured to perform model integration on the M detection models, and perform obstacle detection on the to-be-annotated sensor data by using an integrated model.

8. The apparatus (300) according to claim 6, wherein
the tracking module (303), for the to-be-annotated sensor data, performs a first round of obstacle tracking and matching in chronological order and a second round of obstacle tracking and matching in reverse chronological order according to the detection results, and determines the obstacle trajectory information by combining tracking and matching results of the two rounds.

9. The apparatus (300) according to claim 8, wherein
the tracking module (303) compares the tracking and matching result of the first round with the tracking and matching result of the second round, and retains a same part between the tracking and matching result of the first round and the tracking and matching result of the second round; determines a part to be retained by a greedy solution for different parts between the tracking and matching result of the first round and the tracking and matching result of the second round; and determines the obstacle trajectory information according to the retained part.

10. The apparatus (300) according to claim 6, wherein
the modification module (304) performs noise identification on the obstacle trajectory information by using a pre-trained noise identification model, and takes the detection result corresponding to the obstacle trajectory information identified as non-noise as the annotation result.

11. An electronic device, comprising:
at least one processor; and
a memory in communication connection with the at least one processor; wherein
the memory stores instructions executable by the at least one processor, and the instructions are executed by the at least one processor to enable the at least one processor to perform the method according to any one of claims 1-5.

12. A non-transitory computer-readable storage medium storing computer instructions, wherein the computer instructions are configured to cause a computer to perform the method according to any one of claims 1-5.

13. A computer program product, comprising a computer program, wherein, when the computer program is executed by a processor, the method according to any one of claims 1-5 is performed.
